# EUROPEAN PATENT APPLICATION

(11) **EP 1 429 303 A1**
(43) Date of publication of application: **16.06.2004**
(21) Application number: 02798833.6
(22) Date of filing: 12.09.2002
(51) Int. Cl.: G08G 1/09, G08G 1/0969, G01C 21/26

(54) **SIMPLIFIED TRAFFIC INFORMATION GENERATION METHOD AND APPARATUS**

(30) Priority: 13.09.2001 JP 2001278369
(71) Applicant: MATSUSHITA ELECTRIC INDUSTRIAL CO., LTD., Kadoma-shi, Osaka 571-0050 (JP)
(72) Inventor: ADACHI, Shinya, Yokohama-shi, Kanagawa 227-0038 (JP)
(74) Representative: Balsters, Robert
(86) International application number: PCT/JP2002/009364
(87) International publication number: WO 2003/025883

(57) **Abstract**

Traffic information by a deformed map is efficiently produced from traffic information made of "road geometry data" and "event location data." The association between each link on a digital map and a rectangle forming an event presenting unit on the deformed map is set in advance and held by a deformed map data portion 25. Map matching between received road geometry data and digital map data is carried out by a map matching portion 22, a road section on the digital map is specified, a link on the digital map corresponding to the location of an event is specified based on received event information data and the digital map data 23 for said road section, and a rectangle to represent event information based on the event information data on the deformed map is determined based on the previously set association for the link. In this way, level 2 traffic information can efficiently be produced based on the "road geometry data" and "event location data."

## Description

### < TECHNICAL FIELD >

The present invention relates to a method of producing simplified traffic information in the form of deformed maps, text messages, audio and the like, and an apparatus for carrying out the method. The invention more specifically relates to a method of efficiently producing traffic information made of deformed maps, text messages and the like based on traffic information made of a combination of data to specify a road section on a digital map and data to specify the location of an event based on a relative position in the road section.

### < BACKGROUND ART >

The Vehicle Information and Communication System (VICS) that provides traffic information service provides a on-vehicle apparatus with traffic information through radio beacons, optical beacons, and FM multiple broadcasting. The information includes level 1 traffic information indicating jammed sections in text, level 2 traffic information indicating jammed locations on a deformed map, and level 3 traffic information indicating jammed locations on a digital map held by the on-vehicle apparatus.

The level 1 traffic information may be for example traffic jam information such as "3.0km jam: *Kanshichi-Dori,* Inner Loop, *Koenji* Overpass → *Ohara-Ni"* or travel time information such as "about 40 min: *Kanshichi-Dori*, Inner Loop, *Ohara → Omori-Higashi*," or event information such as "Accident/Lane Restricted: *Daisan-Keihin*, Downline, *Kohoku - → Hodogaya*," and the on-vehicle apparatus upon receiving the traffic information displays these text strings on the display screen.

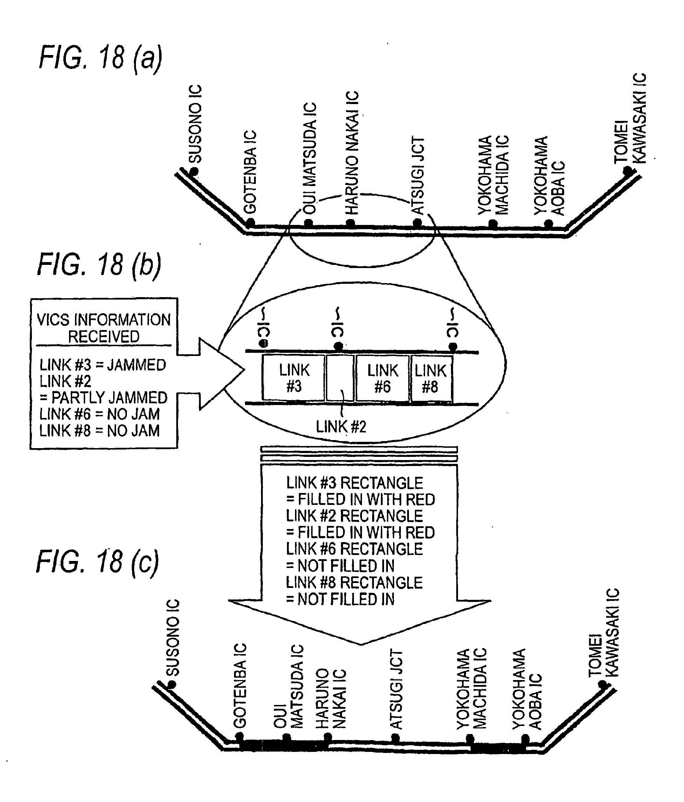

The level 2 traffic information is simplified geometry information as shown in Fig. 18(c) in which jammed sections are filled in with red on a deformed map. The on-vehicle apparatus upon receiving the traffic information displays the simplified geometry on its display screen.

The level 3 traffic information is to provide the on-vehicle apparatus with the location of an event such as a traffic jam and an accident on the map. The on-vehicle apparatus upon receiving the traffic information indicates the location of the jam or accident over the map displayed on the screen, or searches for a route in consideration of these pieces of traffic information, and displays a resulting recommended route.

The center of the system that provides the on-vehicle apparatus with traffic information receives event location information on a digital map corresponding to level 3 traffic information from another organization, and edits the information to generate level 1 and level 2 information to provide.

In Japan, databases for such a digital map are produced by several companies, and the map data contains errors caused by the difference between the base maps and digitizing techniques. The errors are different among the digital maps produced by the companies. Therefore, when a location (such as an accident location) on a digital map is transmitted from a transmitting side to a receiving side, and only the longitude and latitude of the location are presented, different locations on the road could be recognized as the accident location by mistake by the transmitting and receiving sides based on different digital map databases produced by different companies they hold. This mistake is made when the center receives event location information from another organization or when the center transmits level 3 traffic information to the on-vehicle apparatus.

According to a conventional method to improve the inaccuracy in information transmission, a node number is defined for a node such as a crossing point present in a road network or a link number is defined for a link representing a road between nodes. The digital map databases of the companies have recorded crossing points or roads in association with node numbers and link numbers. Then, in event location information indicating a location on a digital map or level 3 traffic information, a road is specified by its link number, and a point on the road is expressed for example as "certain meters from the head of the link."

The center produces level 2 traffic information as follows upon receiving traffic information represented by the link number from another organization.

The center has deformed map geometry data as shown Fig. 18(a), and rectangles (or lines) each forming a fill-in unit for a jam are provided in series along the road on the deformed map road geometry. One rectangle corresponds to one or more links, and therefore a rectangle can be specified by specifying a link number.

As shown in Fig. 18(b), upon receiving VICS information including the content of an event occurring in each link and a link number for the link from another organization, the center fills in a rectangle corresponding to the link number having the jam with red, and produces a deformed map as shown in Fig. 18(c). The center transmits drawing data or image data representing the deformed map in Fig. 18(c) to the on-vehicle apparatus as level 2 traffic information.

Upon receiving traffic information represented by a link number from another organization, the center produces level 1 traffic information as follows.

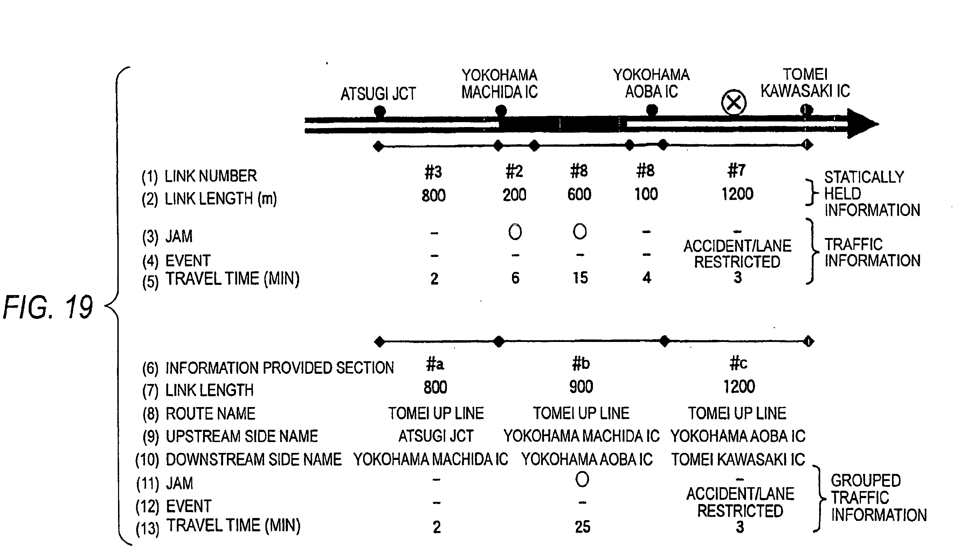

The center previously determines an information providing unit of traffic information in text as shown in Fig. 19. In the example in Fig. 19, *"Atsugi* JCT ↔ *Yokohama Machida* IC," "*Yokohama Machida* IC ↔ *Yokohama Aoba* IC," and "*Yokohama Aoba* IC ↔ *Tomei Kawasaki* IC" each form an information providing unit. For example, when a traffic accident has taken place somewhere between "*Yokohama Aoba* IC" and "*Tomei Kawasaki* IC," which has necessitated lane restriction, text traffic information represented by the names of the starting and terminal points of the information provided section that forms the information providing unit such as "Accident/Lane Restricted: *Yokohama Aoba* IC → *Tomei Kawasaki* IC" is produced. One information providing unit corresponds to one or more links, so that the information provided section is specified by specifying a link number.

The center has data for link numbers (1) and link lengths (2), specification numbers (6) for information provided sections each forming an information providing unit, section lengths (7), route names (8), and the upstream side names (9) and downstream side names (10) of sections. Upon receiving jam information (3) or event information (4) each represented by a link number, and travel time information (5) for each link from another organization, the center replaces jam information (11), event information (12), and traveling information (13) with these pieces of information, produces a text message made of "route name + direction/upstream side name/downstream side name/content" and provides this message to the on-vehicle apparatus.

Note that when the jam extends over a plurality of information provided sections, the upper stream side name of the information provided section including the starting end of the jam is indicated as the upstream side name, and the downstream side name of the information provided section including the end of the jam is indicated as the downstream side name.

However, the node numbers or the link numbers defined in the road network must be replaced with new numbers as new roads are constructed and changes are made to existing roads. Once a node number or a link number is changed, the digital map data in the companies must be updated. Therefore, the method of transmitting location information in the digital maps using the node numbers and the link numbers needs a great social cost for maintenance.

. In order to improve the disadvantage, the inventors have suggested the following method of transmitting location information in a digital map in Japanese Patent Laid-Open Nos. 11-214068 and 11-242166.

According to the disclosed method, when the information providing side conveys a road point where an event such as a jam and an accident has taken place to the receiving side, it transmits the road geometry of a prescribed length of a road section including the road point represented by a row of coordinates of nodes and interpolation points arranged on the road and "event location data" representing the location of the event on the road based on a relative position in the road section that is represented by the road geometry data. (The interpolation points are apexes of folded lines approximated to the curve of the road. The nodes as well as the interpolation points are referred to as "nodes" in the specification unless otherwise specified.) The side receiving the information carries out map matching using the road geometry data, specifies the road section on a digital map of its own, and specifies the location of the event in the road section using the event location data.

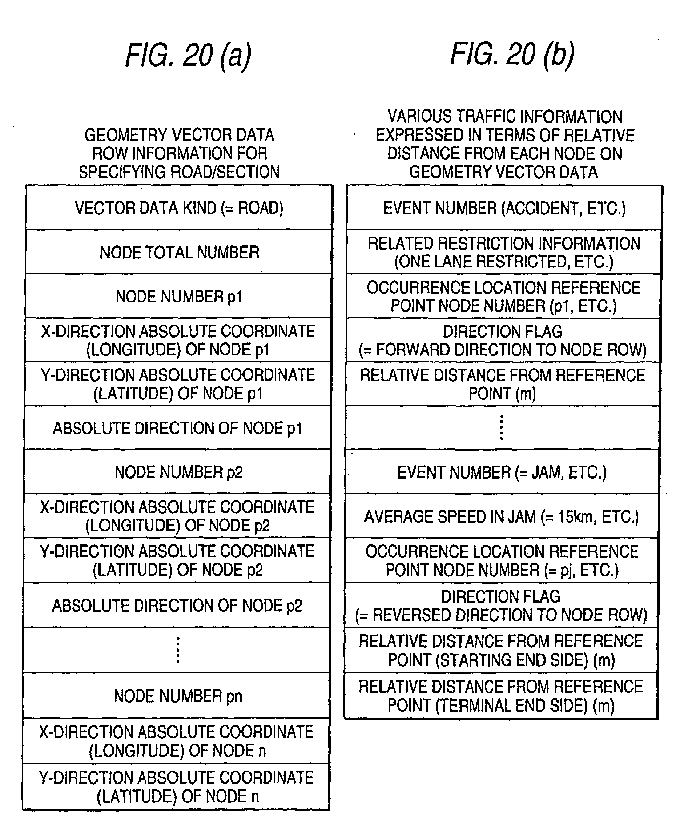

Fig. 20(a) shows an example of the "road geometry data" and Fig. 20(b) shows an example of the "event location data." The "road geometry data" and "event location data" are provided as level 3 traffic information, so that the on-vehicle apparatus upon receiving the information can specify the event location on the digital map of its own without depending on node numbers and link numbers.

Consequently, according to the method of transmitting location information, it is no longer necessary to define common node numbers and link numbers.

### < DISCLOSURE OF THE INVENTION >

When however the method of transmitting location information for a digital map based on "road geometry data" and "event location data" without using common node numbers and link numbers is employed, a conventional method of producing level 1 and level 2 traffic information from level 3 traffic information must be changed as well.

The present invention has been made based the recognized problem as described above, and it is an object of the invention to provide a method of efficiently producing traffic information by a deformed map, a text message, an audio guidance or the like based on traffic information made of "road geometry data" and "event location data," and an apparatus for carrying out the method.

Therefore, according to the invention, in a method of producing traffic information, simplified geometry traffic information having event information displayed on a deformed map based on road geometry data representing a road section on a digital map by data row information, and event information data representing the location of an event based on a relative location in the road section, the association between each link or each node on the digital map and an element (rectangle or line) forming an event presenting unit on the deformed map is set in advance, map matching between the road geometry data and digital map data is carried out in order to specify the road section on the digital map and specify a link or a node on the digital map corresponding to the location of the event based on the event information data and the digital map data for the road section and the element that displays event information based on the event information data on the deformed map is determined according to the association set in advance for the link or node.

Furthermore, in a method of producing traffic information having event information presented by a text message or an audio message based on road geometry data representing a road section on a digital map by data row information, and event information data representing the location of an event based on a relative location in the road section, the association between each link or each node on the digital map and an information provided section forming an event presenting unit by the text message or audio message is set in advance, map matching between the road geometry data and the digital map data is carried out in order to specify the road section on the digital map, and specify a link or node on the digital map corresponding to the location of the event based on the event information data and the digital map data for the road section and the information provided section that presents event information based on the event information data by the text message or audio message is determined according to the association set in advance for the link or node.

Furthermore, an apparatus for producing simplified geometry traffic information having event information displayed on a deformed map based on road geometry data representing a road section on a digital map by data row information, and event information data representing the location of an event based on a relative location in the road section includes a digital map database, a deformed map data portion holding geometry data for a deformed map, geometry data for an element forming an event presenting unit in the deformed map, and an association table having the description of the association between an identification number attached to each link on the digital map and the element, receiving means for receiving the road geometry data and event information data, map matching means for carrying out map matching between the road geometry data and the digital map data, thereby specifying the road section on the digital map and a link on the digital map corresponding to the location of an event from the event information data and the digital map data for the road section, deformed map superposition information display determining means for determining the element to represent the event information based on the event information data from the link specified by the map matching means using the association table, and deformed map superposition processing means for superposing a figure in a location on the deformed map corresponding to the element determined by the deformed map superposition information display determining means.

Furthermore, an apparatus for producing text message traffic information, the traffic information presenting event information by a text message based on road geometry data representing a road section on a digital map by data row information, and event information data representing the location of an event based on a relative location in the road section includes a database for the digital map, an association table having the description of the association between an identification number attached to each link on the digital map and an information provided section forming an event presenting unit by the text message, receiving means for receiving the road geometry data and event information data, map matching means for carrying out map matching between the road geometry data and the digital map data, thereby specifying the road section on the digital map, and specifying a link on the digital map corresponding to the location of the event based on the event information data and the digital map data for the road section, text massage information producing means for determining the information provided section for which event information based on the event information data from the link specified by the map matching means is displayed using the association table, and producing text message information based on the information on the information provided section and the event information, and text message information transmitting means for transmitting the text message information produced by the text message information producing means for providing information.

Furthermore, an apparatus for producing audio sound message traffic information having event information presented by an audio message based on road geometry data representing a road section on a digital map by data row information, and event information data representing the location of an event based on a relative location in the road section includes a database for the digital map, an association table having the description of the association between an identification number attached to each link or node on the digital map and an information provided section forming an event presenting unit by the audio message, receiving means for receiving the road geometry data and event information data, map matching means for carrying out map matching between the road geometry data and the digital map data, thereby specifying the road section on the digital map and specifying a link or node on the digital map corresponding to the location of an event based on the event information data and the digital map data for the road section, audio message information producing means for determining the information provided section for which event information based on the event information data from the link or node specified by the map matching means is displayed using the association table, and producing audio message information based on information for the information provided section and the event information, and audio guidance output means for outputting the audio message information produced by the audio message information producing means.

By the method of producing traffic information according to the invention and the apparatus therefor, traffic information made of a deformed map, a text message, or an audio guidance can efficiently be produced from traffic information that conveys the location of an event on a digital map based on a combination of the "road geometry data" and "event location data."

### < BRIEF DESCRIPTION OF THE DRAWINGS >

Fig. 1 is a block diagram of the configuration of a simplified geometry producing/transmitting apparatus according to a first embodiment of the invention;
Fig. 2 is a schematic diagram showing the process of how a method of producing deformed map according to the first embodiment is carried out;
Fig. 3 shows a map database (a), a frame number-map data link number association table (b), and fill-in data (c) ;
Fig. 4 is a flowchart for use in illustration of the operation of the simplified geometry producing/transmitting apparatus according to the first embodiment;
Fig. 5 is a schematic diagram showing the process of how a deformed map is produced by the method of producing the deformed map according to the first embodiment;
Fig. 6 shows the data structure (graphic coordinate system vector data) of transmission data for the deformed map produced by the method according to the first embodiment;
Fig. 7 shows the data structure (image data) of transmission data for the deformed map produced by the method according to the first embodiment;
Fig. 8 shows the data structure (combination type) of transmission data for the deformed map produced by the method according to the first embodiment;
Fig. 9 is a schematic diagram showing the process of a method of producing a second deformed map according to the first embodiment;
Fig. 10 is a diagram showing a deformed map having an event indicated by a mark produced by the method of producing a deformed map according to the first embodiment;
Fig. 11 is a block diagram showing the configuration of a simplified geometry producing/transmitting apparatus according to a second embodiment of the invention;
Fig. 12 is a block diagram of the configuration of a text message information producing and transmitting apparatus according to a third embodiment of the invention;
Fig. 13 is a schematic diagram showing the process of a method of producing a text message according to a third embodiment;
Fig. 14 shows a map database (a), and an information provided section-map data link association table 35 (b) for use in the method of producing a text message according to the third embodiment;
Fig. 15 is a flowchart for use in illustration of the operation of the text message information producing/transmitting apparatus according to the third embodiment;
Fig. 16 is a block diagram of the configuration of an audio guidance apparatus according to a fourth embodiment of the invention;
Fig. 17 is a block diagram showing the operation of the audio guidance apparatus according to the fourth embodiment of the invention;
Fig. 18 is a schematic diagram showing the process of how a conventional deformed map is produced;
Fig. 19 a diagram showing the process of how a conventional text message traffic information is produced; and
Fig. 20 shows road geometry data (a) and event location data (b).

Note that the drawings show a transmitting side apparatus 10, an event information input portion 11, a digital map display portion 12, a location information conversion portion 13, digital map databases 14, 23, 33, 43, and 63, a location information transmitting portion 15, a simplified geometry producing/transmitting apparatus 20, location information receiving portions 21, 31, 41, and 61, map matching portions 22, 32, 42, and 62, deformed map superposition information display determining portions 22 and 44, deformed map data portions 25 and 45, deformed map superposition processing portions 26 and 46, a deformed map transmitting portion 27, a text message information producing/transmitting portion 30, a text message information producing portion 34, information provided section-map data link association tables 35 and 65, a text message information transmitting portion 36, a simplified geometry producing/display apparatus 40, a deformed map display portion 47, vehicle self location determining portions 48 and 67, GPS antennas 49 and 69, gyros 50 and 70, an audio sound guidance apparatus 60, an audio sound guidance information producing portion 64, an audio sound guidance output portion 66, and a speaker 68.

### < BEST MODE FOR CARRYING OUT THE INVENTION >

### (First Embodiment)

A method of producing traffic information in a deformed map based on "road geometry data" and " event location data" and transmitting the data according to a first embodiment and an apparatus for carrying out the method will be described.

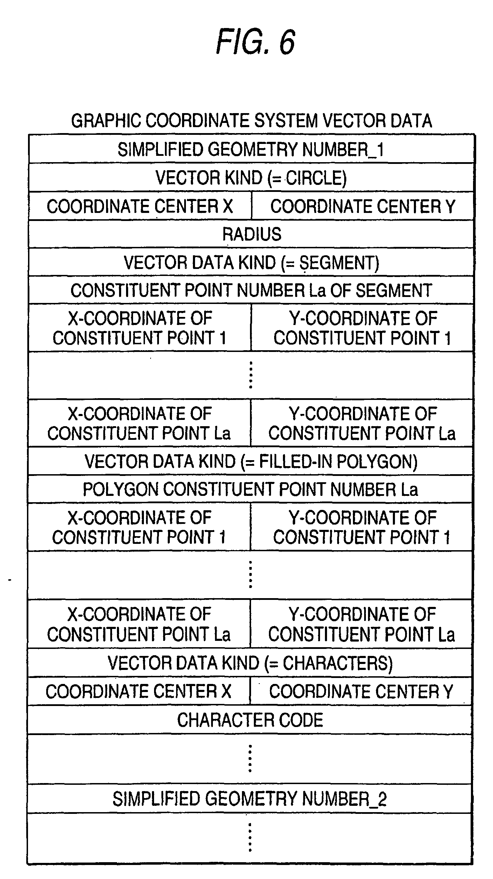

Herein, the deformed map is a map deformed in representation as shown in Fig. 6 in order to improve the visibility of the map, simplify a display portion or a map data processing portion, or reduce the amount of information or other purposes.

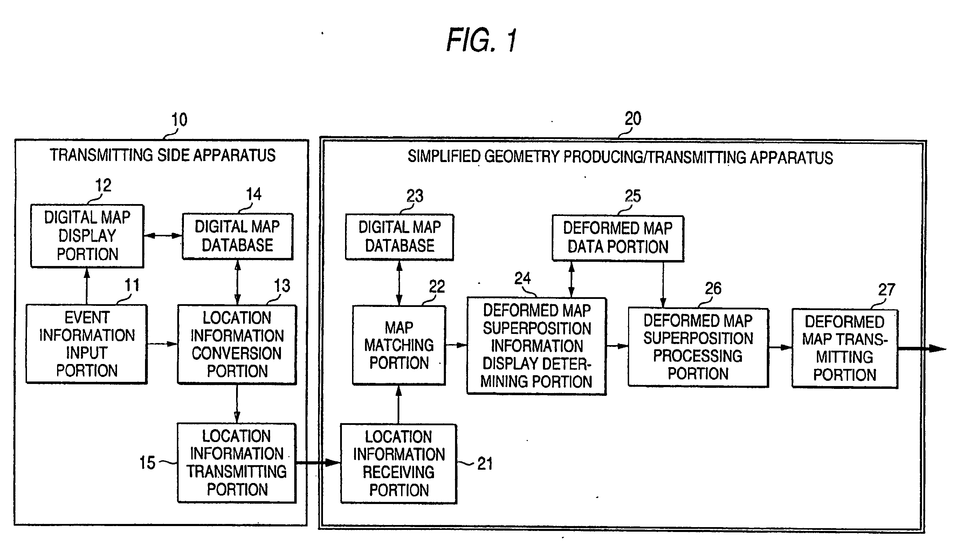

Fig. 1 shows the configuration of a simplified geometry producing/transmitting apparatus 20 that receives "road geometry data" and "event location data" from a transmitting side device 10, produces traffic information in a deformed map and transmits the resulting information to an apparatus mounted in a vehicle. The traffic information providing system generally includes a service provider that provides the on-vehicle apparatus with level 1, 2, and 3 traffic information, a contents provider that edits live traffic information and provides the edited information to the service provider, and an information provider that provides live traffic information to the contents provider. The transmitting side apparatus 10 in Fig. 1 corresponds to the contents provider, and the simplified geometry producing/transmitting apparatus 20 corresponds to the service provider.

Transmitting side apparatus 10 includes an event information input portion 11 to which live event information for example about an accident and jam is input, a database 14 for a digital map, a digital map display portion 12 that displays the location of an event over the digital map, a location information conversion portion 13 that converts the event information into "road geometry data" and "event location data" and a location information transmitting portion 15 that transmits the converted "road geometry data" and "event location data."

The simplified geometry producing/transmitting apparatus 20 includes a location information receiving portion 21 that receives the "road geometry data" and "event location data" from the transmitting side apparatus 10, a database 23 for a digital map, a map matching portion 22 that carries out map matching to specify the road section represented by the "road geometry data" on a digital map of its own, and specify the location of the event in the road section based on the "event location data," a deformed map data portion 25 that holds data for a display unit (frame) of traffic information corresponding to geometry data or a filled-in rectangle in the deformed map, a deformed map superposition information display determining portion 24 that determines the frame on the deformed map superposed on the location of the event, a deformed map superposition processing portion 26 that superposes the frame filled in based on the result of determination on the deformed map, and a deformed map transmitting portion 27 that transmits data for the deformed map after the superposition processing.

The map matching portion 22, deformed map superposition information display determining portion 24 and the deformed map superposition processing portion 26 in the simplified geometry producing/transmitting apparatus 20 are implemented when a computer stored in the simplified geometry producing/transmitting apparatus 20 executes a program-defined operation.

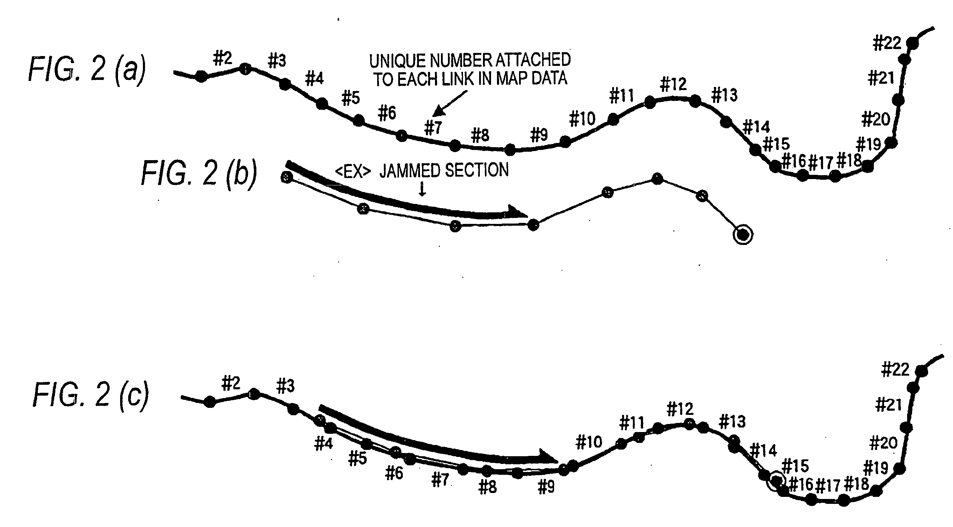

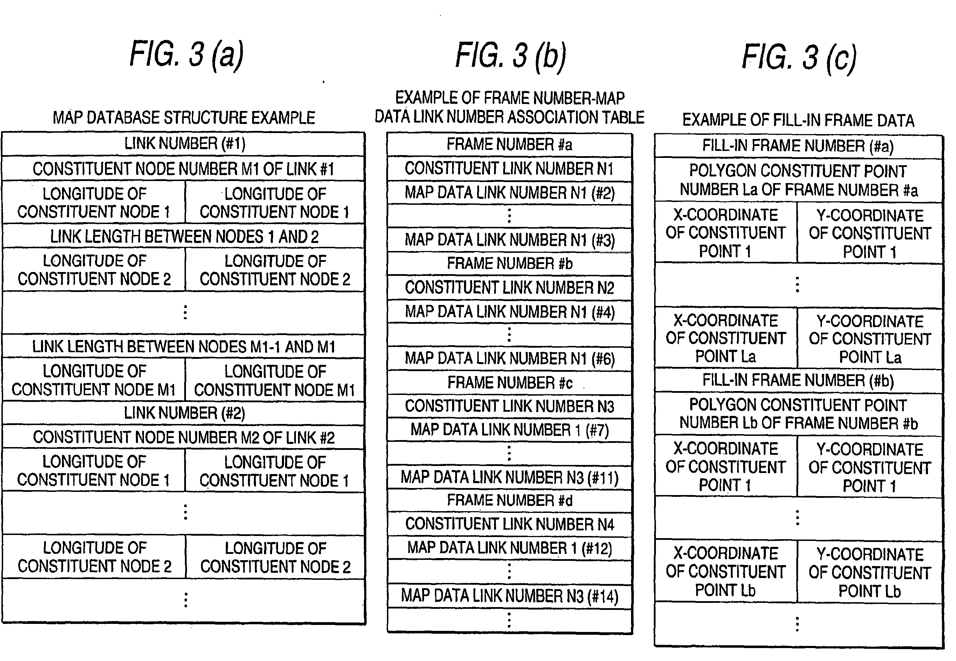

As shown in Fig. 2(a), the administrator of the simplified geometry producing/transmitting apparatus 20 sets unique link numbers (map data link numbers #2 to #22) to links in a road section for which traffic information in the digital map is to be provided. As shown in Fig. 3(a), the digital map database 14 holds geometry data for the links provided with the map data link numbers.

The administrator of the simplified geometry producing/transmitting apparatus 20 also sets a frame forming a display unit of traffic information. The frame includes one or more links. As shown in Fig. 3(b), the deformed map data portion 25 holds a table of frame numbers and the map data link numbers of the links included in the frames in association with each other (frame number-map data link number association table). As shown in Fig. 3(c), the geometry data of each frame (filled-in frame data) is held.

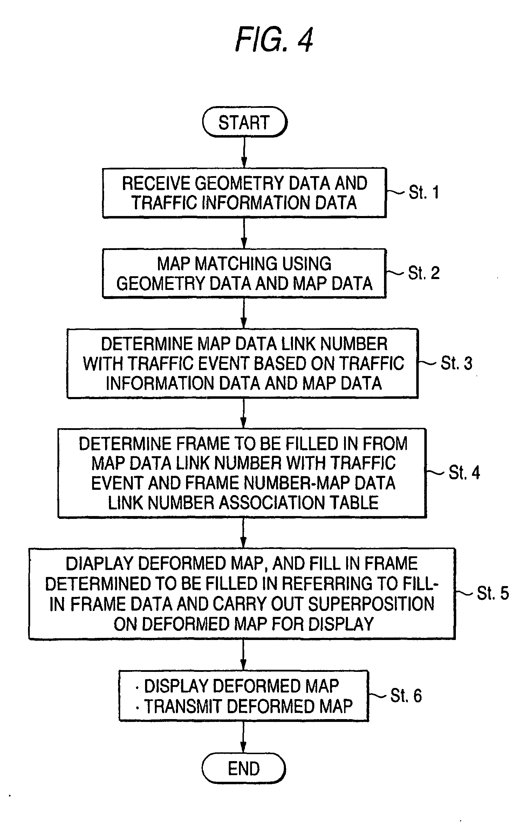

The flowchart in Fig. 4 shows an operating procedure for the simplified geometry producing/transmitting apparatus 20.

The transmitting side apparatus 10 produces geometry data (road geometry data) and traffic information data (event location data) shown as an example in Fig. 20 using the location information conversion portion 13, and transmits the information from the location information transmitting portion 15. The location information receiving portion 21 in the simplified geometry producing/transmitting apparatus 20 receives the geometry data and traffic information data. Fig. 2(b) schematically shows a road section represented by the geometry data and a jammed section represented by the traffic information data (step 1).

The map matching portion 22 carries out map matching using the received geometry data and the digital map data in the digital map database 23, and specifies the road section represented by the geometry data on the digital map (step 2).

The map matching portion 22 then determines the map data link number of the link with the traffic event by referring to the traffic information data and the digital map data for the specified road section (step 3).

Fig. 2(c) shows the state in which map matching for the geometry data has been carried out and a jam location on the digital map has been specified based on the traffic information data. Consequently, the map data link number (#4 to #9) of the link corresponding to the jammed location is determined.

The deformed map superposition information display determining portion 24 determines the frame number of a frame to be filled in based on the map data link number of the link with the traffic event using the frame number-map data link number association table (Fig. 3(b)) stored in the deformed map data portion 25 (step 4).

In the example in Fig. 2(c), a frame for each map data link number and how to display it (whether or not to fill in with color) is determined as follows based on the traffic state of the link.
#4: jammed → frame b: filled in with red
#5: jammed → frame b: filled in with red
·
·
#7: jammed → frame c: filled in with red
#8: jammed → frame c: filled in with red ·
·
#10: no jam → frame c: not filled in
·
#12: no jam → frame d: not filled in

The deformed map superposition processing portion 26 displays the deformed map read out from the deformed map data portion 25, then fills in the frames determined to be filled referring to the fill-in frame data (Fig. 3(c)), and displays the filled-in frames over the deformed map (step 5).

By the fill-in processing, a frame having both "filled in with red" and "not filled in" or at least one "filled in with red" like the frame c is filled in. More specifically, the fill-in processing is carried out in the OR condition.

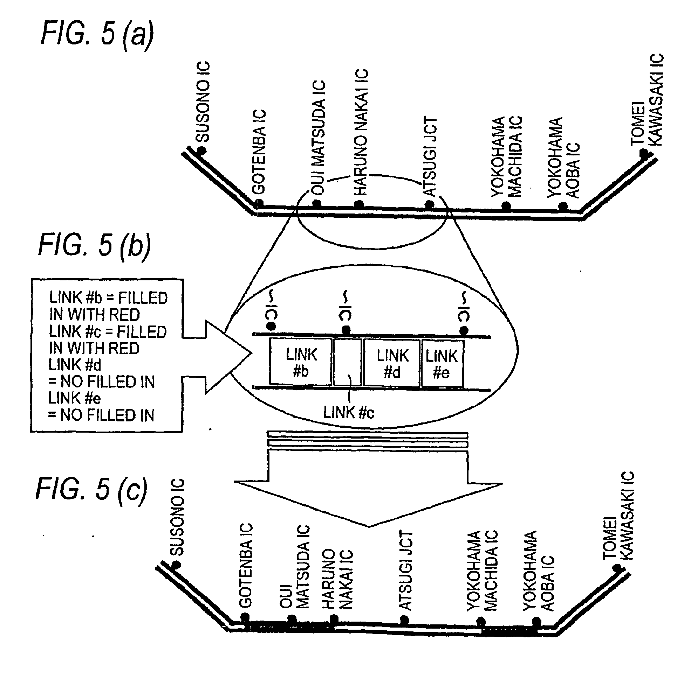

Fig. 5(a) schematically shows the deformed map data read out from the deformed map data portion 25 and Fig. 5(b) schematically shows the geometry data of each frame. A corresponding frame is filled in based on the information for a framed to be filled determined by the deformed map superposition display determining portion 24 and superposed on the deformed map, so that the deformed map as shown in Fig. 5(c) is produced.

The deformed map transmitting portion 27 transmits the superposed deformed map data (step 6).

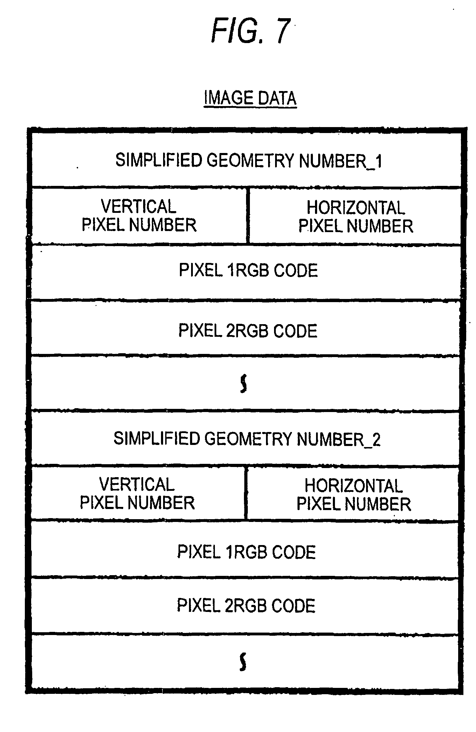

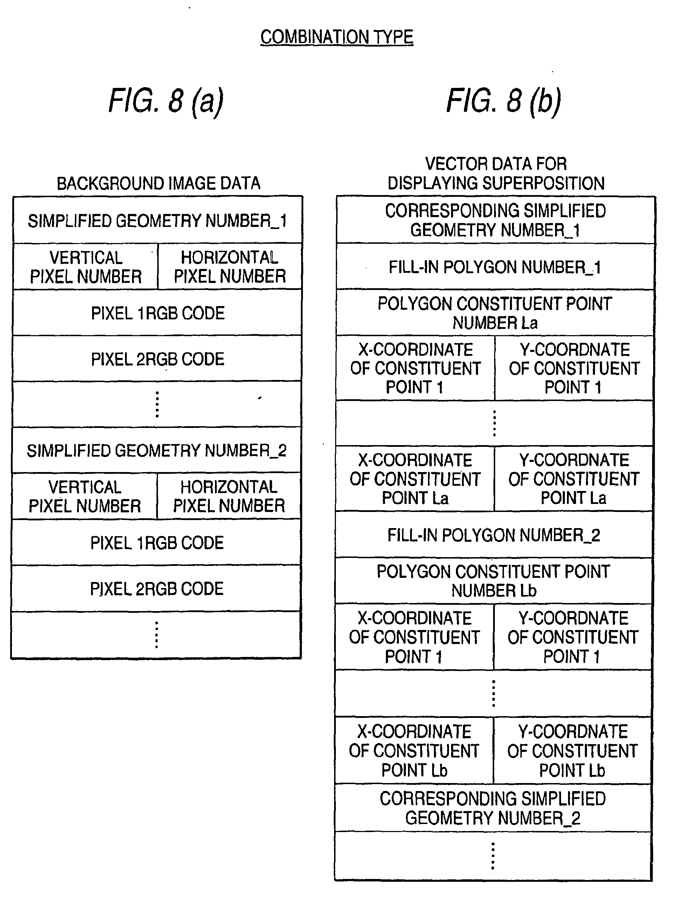

The deformed map can be converted into transmission data in various data structures and transmitted from the deformed map transmitting portion 27. Fig. 6 shows an example of the deformed map with filled-in frames superposed thereon represented in the form of vector data in graphic coordinate system. Fig. 7 shows an example of the deformed map represented in the form of image data. As shown in Fig. 8, background image data (a) representing the geometry of the deformed map and vector data (b) for superposition display that represents filled in frames may be combined and transmitted, and then these data pieces may be superposed for display on the receiving side.

In this way, the simplified geometry producing/transmitting apparatus 20 produces level 2 traffic information based on the "road geometry data" and "event location data," and the information may be provided to the on-vehicle apparatus.

Note that when "filled in with read" and "not filled-in" are both present for one frame, the frame is filled in based on the OR condition as there is at least one "filled in with red," but the condition may be set in different ways. For example, the deformed map superposition information display determining portion 24 may calculate the total link length of the links included in the frame and the total link length of the links corresponding to the jam are calculated, and if their ratio is over a specified value, the frame may be "filled in with red." Alternatively, when the total link length of the links corresponding to the jam is over a specified distance, the frame may be "filled in with red." In the above example, a unique link number is attached to each link in the digital map, but a unique number may be attached to each node in the digital map instead of the links.

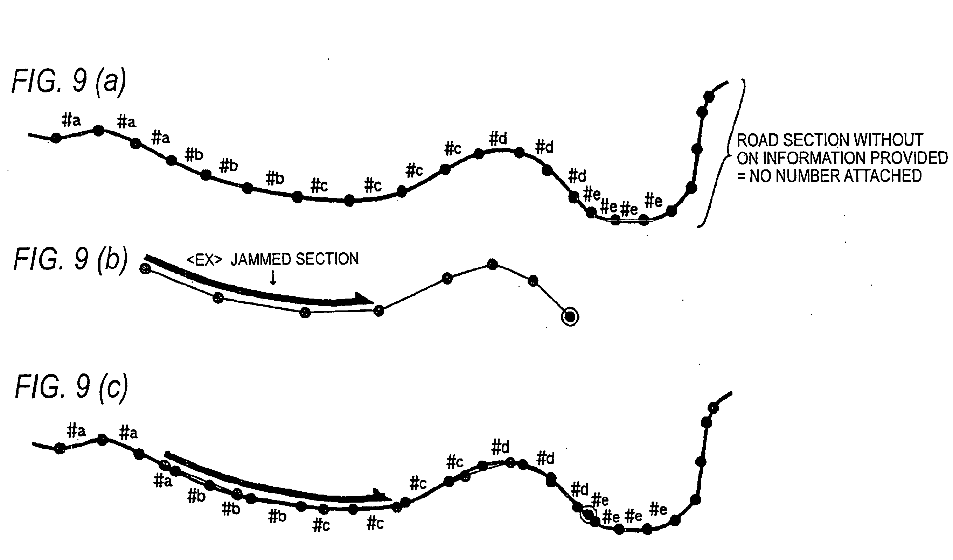

Herein, the filling in of each frame is determined based on the traffic state of each link using the frame number-map data link number association table by way of illustration, but as shown in Fig. 9(a), an arbitrary frame number (#a to #e) may be set for each link to a road section for which traffic information in a digital map is provided, and the geometry data of each link with such a frame number (data having the description of the frame number instead of the link number in the map data in Fig., 3(a))is held in the digital map database 14. Using the digital map data, map matching is carried out between the received geometry data and the traffic information data (Fig. 9(b)), and as shown in Fig. 9(c), a frame to be filled in may be determined based on the frame number attached to the link with the traffic event.

In this case, when there is a jam in part of the sections of the frame, the frame may be determined as a frame to be "filled in with red" based on the OR condition or the ratio of the length of the link with the jam may be produced relative to the total link length of the frame, and the frame may be determined as a frame to be "filled in with red" only when the ratio is over a specified value.

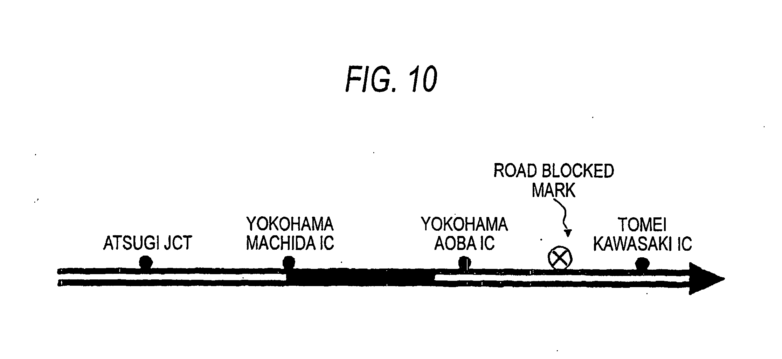

In the above description, rectangles are filled in with color or lines are colored on a deformed map to display a traffic event, but as shown in Fig. 10, a particular mark indicating for example "road blocked" may be superposed on the corresponding rectangle or line on the deformed map to indicate the traffic event.

The operation of the simplified geometry producing/transmitting apparatus in this case can be implemented by changing the following steps in the process flow in Fig. 4. In step 4, when the frame number of the frame to be filled in is determined from the map data link number of the link with the traffic event, in step 5, the deformed map is displayed. Then, the location to display a mark is determined from the frame to be filled in determined in step 4, and the mark to indicate the traffic event is selected and superposed over the deformed map in the mark display location. The mark display location may be calculated as the barycentric position of a rectangular frame to be filled in or as the central position of a line segment.

### (Second Embodiment)

According to a second embodiment, a on-vehicle apparatus that produces traffic information in a deformed map from "road geometry data" and "event location data" and displays the information will be described.

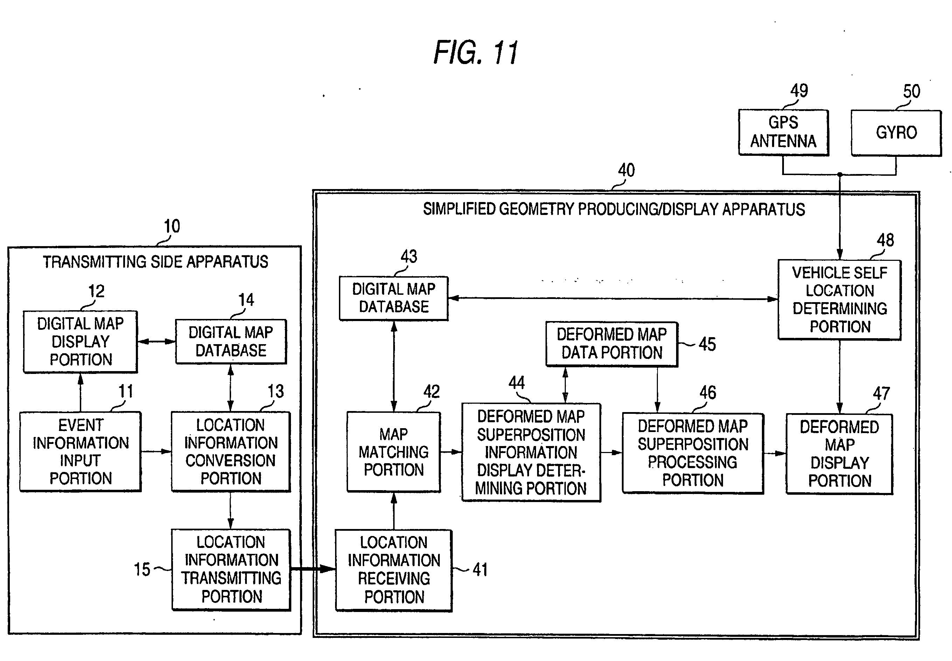

Fig. 11 shows the configuration of a simplified geometry producing/display apparatus 40 corresponding to the on-vehicle apparatus and a transmitting apparatus 10 that transmits the "road geometry data" and "event location data" to the simplified geometry producing/display apparatus 40. The transmitting side apparatus 10 corresponds to a service provider that provides "road geometry data" and "event location data" as level 3 traffic information to the on-vehicle apparatus. The configuration of the transmitting side apparatus 10 is not different from that of the first embodiment (Fig. 1).

The simplified geometry producing/display apparatus 40 includes a location information receiving portion 41 that receives the "road geometry data" and "event location data" from the transmitting apparatus 10, a digital map database 43 for a digital map, a map matching portion 42 that carries out map matching and specifies a road section represented by the "road geometry data" on a digital map of its own, and specifies the location of an event in the road section based on the "event location data," a deformed map data portion 45 that holds geometry data for the deformed map, a frame number-map data link association table, and data for frames to be filled in, a deformed map superposition information display determining portion 44 that determines a frame on the deformed map to be superposed on the event location, a deformed map superposition processing portion 46 that superposes a frame filled in on the deformed map based on the result of determination, a deformed map display portion 47 that displays the deformed map after the superposition processing and a vehicle self location determining portion 48 that determines the location of the vehicle using data received at a GPS antenna 49 and data from a gyro 50.

The map matching portion 42, the deformed map superposition information display determining portion 44, the deformed map superposition processing portion 46, and the vehicle self location determining portion 48 in the simplified geometry producing/display apparatus 40 can be implemented when a computer stored in the simplified geometry producing/display apparatus 40 carries out operations specified by a program.

The digital map database 43 in the apparatus stores geometry data for each link with a map data link number as shown in Fig. 3, and the deformed map data portion 45 stores the frame number-map data link number association table shown in Fig. 3(b) and data for frames to be filled in as shown in Fig. 3(c) in addition to the deformed map data.

The deformed map display portion 47 typically displays a map around the vehicle location determined by the vehicle self location determining portion 48, and the mark representing the location of the vehicle, while once level 2 traffic information display mode is set, a deformed map produced by the deformed map superposition processing portion 46 is displayed.

In the simplified geometry producing/display apparatus 40, the process of producing the deformed map is the same as the process by the simplified geometry producing/transmitting apparatus 20 (Fig. 1) according to the first embodiment, geometry data (road geometry data) in Fig. 20(a) and traffic information data (event location data) in Fig. 20(b) transmitted from the transmitting side apparatus 10 as level 2 traffic information are received and a deformed map having a frame corresponding to the location of an event filled in by the process shown in Fig. 4 is produced. The produced deformed map is displayed at the deformed map display portion 47.

In this way, the simplified geometry producing/transmitting apparatus can edit/produce a deformed map from level 3 traffic information on its own and display the result.

### (Third Embodiment)

According to a third embodiment, a method of producing and transmitting traffic information in text from "road geometry data" and "event location data" according to a third embodiment and an apparatus for carrying out the method will be described.

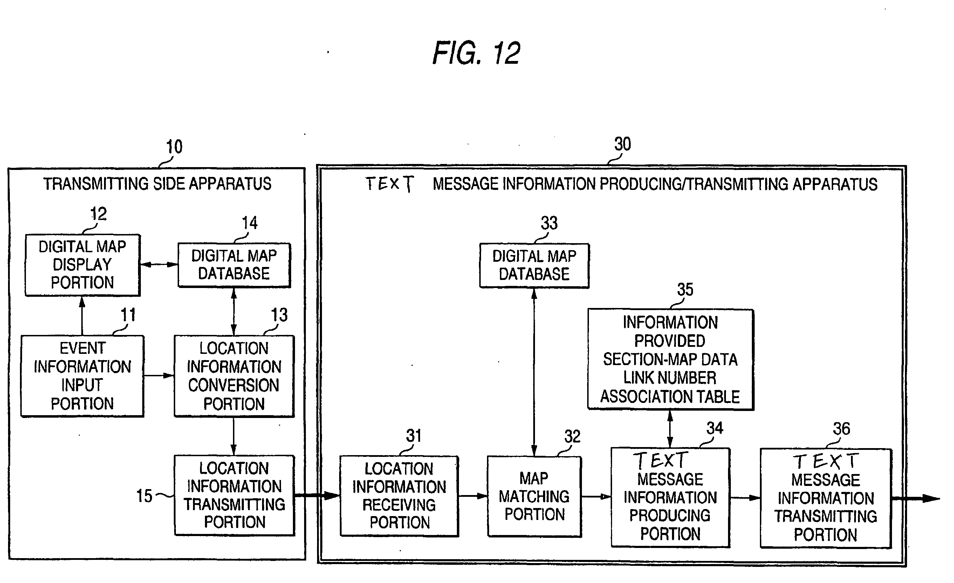

Fig. 12 shows as the configuration of a text message information producing/transmitting apparatus 30 that receives the "road geometry data" and "event location data" from the transmitting side apparatus 10, produces traffic information made of a text message and transmits the text message to a on-vehicle apparatus. The transmitting side apparatus 10 corresponds to a contents provider, and the text message information producing/transmitting apparatus 30 corresponds to a service provider. The configuration of the transmitting side apparatus 10 is not different from the first embodiment (Fig. 1).

The text message information producing/transmitting apparatus 30 includes a location information receiving portion 31 that receives the "road geometry data" and "event location data" from the transmitting side apparatus 10, a digital map database 33, and a map matching portion 32 that carries out map matching to specify a road section represented by the "road geometry data" on a digital map of its own and specifies the location of an event in the road section, an information provided section-map data link number association table 35 having an information provided section as an information providing unit of level 2 traffic information and a map data link number in association with each other, a text message information producing portion 34 that produces text message information using the information provided section-map data link number association table 35, and a text message information transmitting portion 36 that transmits the text message information.

The map matching portion 32 and the text message information producing portion 34 in the text message information producing/transmitting apparatus 30 are implemented when a computer stored in the text message information producing/transmitting apparatus 30 carries out operations specified by a program.

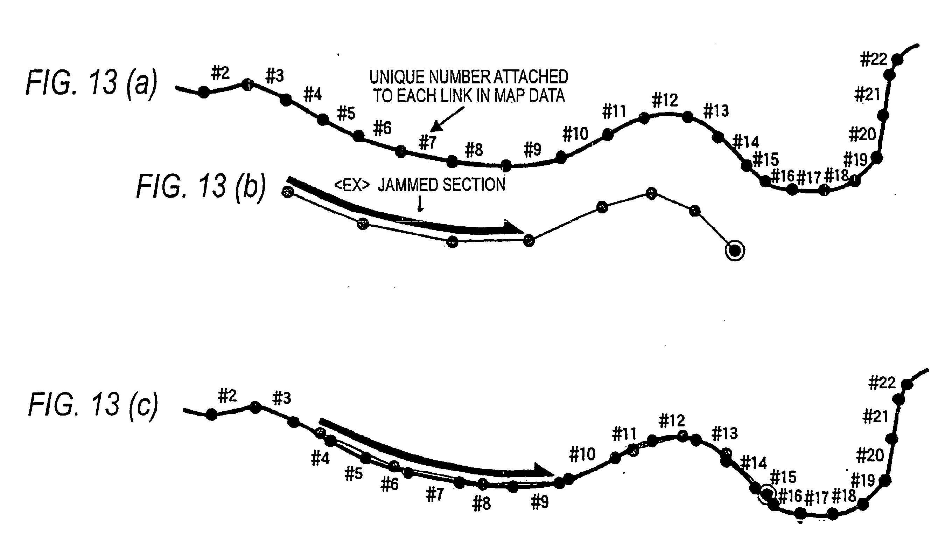

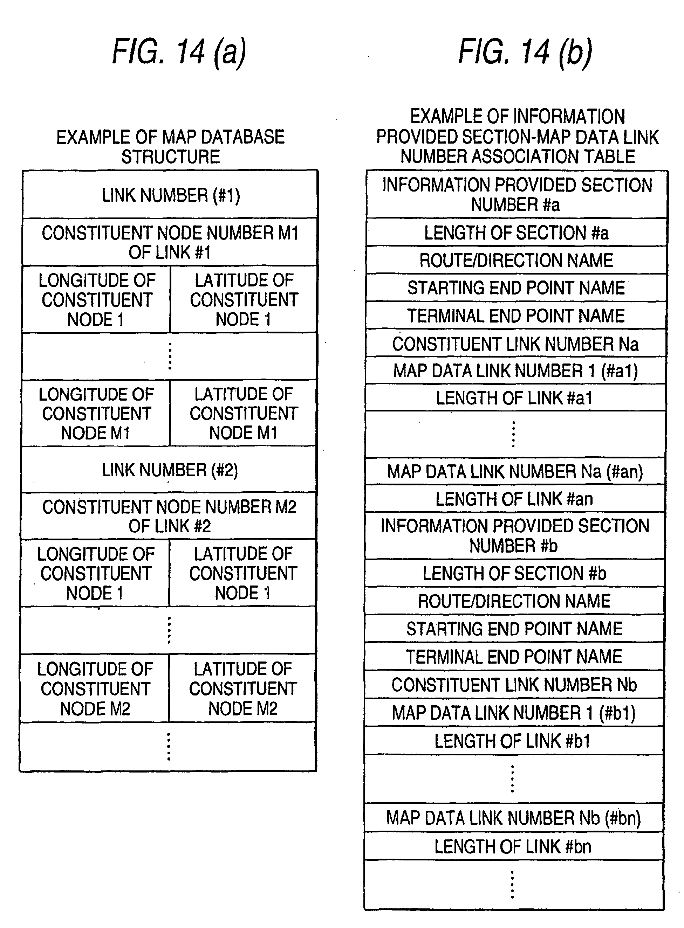

As shown in Fig. 13(a), the administrator of the text message information producing/transmitting apparatus 30 sets a unique link number (map data link numbers #2 to #22) for each link in a road section in a digital map for which traffic information in the digital map is to be provided. The digital map database 33 holds the geometry data of each link attached with a map data link number as shown in Fig. 14(a).

The administrator of the text message information producing/transmitting apparatus 30 sets an information provided section forming a display unit of traffic information by a text message. The information provided section includes one or more links. The information provided section-map data link number association table 35 is a table including information provided sections and links in association with each other, and as shown in Fig. 14(b), for each information provided section number for a corresponding information provided section, the length of the information provided section, the name of road surface/direction, the name of the starting point, the name of the terminal point, the number of links forming the section, the map data link number of each of the links, and data for the link length of each link.

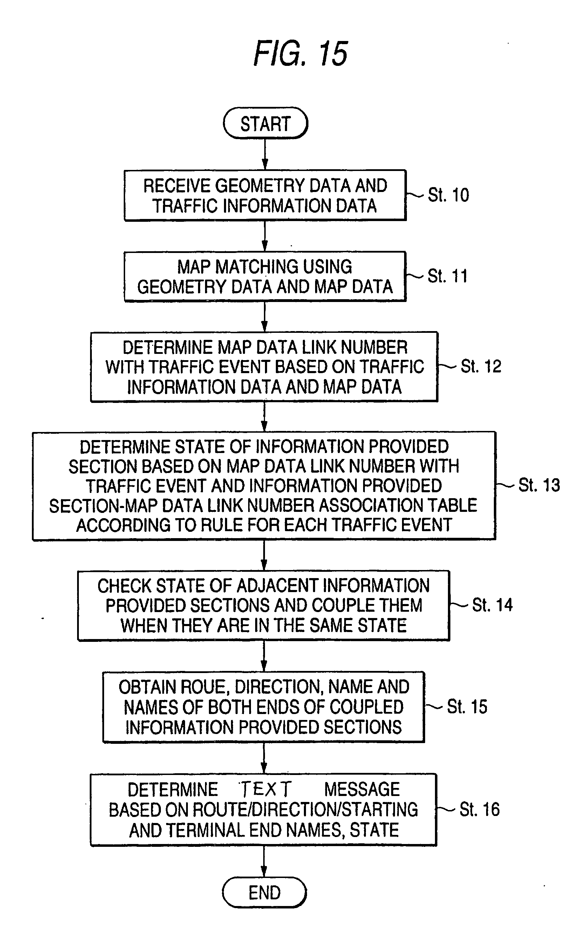

The flowchart in Fig. 15 shows an operation procedure for the text message information producing/transmitting apparatus 30.

The transmitting side apparatus 10 produces geometry data (road geometry data) and traffic information data (event location data) shown as an example in Fig. 20 using the location information conversion portion 13 and transmits the data from the location information transmitting portion 15. The location information receiving portion 31 in the text message information producing/transmitting apparatus 30 receives the geometry data and the traffic information data (step 10). Fig. 13(b) schematically shows road sections represented by geometry data and a jammed section represented by the traffic information data.

The map matching portion 32 carries out map matching using the received geometry data and the digital map data in the digital map database 33, and specifies the road sections represented by the geometry data on the digital map (step 11).

The map matching portion 32 compares the traffic information data and the digital map data for the specified road section in order to determine the map data link number for the link with the traffic event (step 12).

In Fig. 13(c), map matching about the geometry data is carried out and the jammed location on the digital map based on the traffic information data is specified. As a result, the map data link number (#4 to #9) of the link corresponding to the jammed location is determined.

The text message information producing portion 34 determines the state of the information provided section according to rules for each traffic event from the map data link number of the link with a traffic event, using the information provided section-map data link number association table 35 (Fig. 14(b)) (step 13).

When the traffic event is a jam, the state of each information provided section is specified based on the jam state of each link. In the example in Fig. 13(c), the state is specified as follows.
#2 → information provided section a: no jam
#3 → information provided section a: no jam
#4 → information provided section a: jammed
#5 → information provided section b: jammed
#6 → information provided section b: jammed
#7 → information provided section b: jammed

Then, according to the rules for determining a jam, the presence/absence of a jam in each information provided section is determined. When the section length of the information provided section and the total link length of jammed links in the section are compared, and the state is determined as a jam only when the ratio is over a specified value according to the jam determining rule, the information provided section a is determined as having no jam, and the information provided section b is determined as having a jam. According to another applicable rule, when the traffic event is an accident/lane restriction, and even one such state of accident/lane restriction is present in a specified information provided section based on the state of the links, the information provided section may be determined as having an accident/lane restriction.

The text message information producing portion 34 checks the state of an adjacent information provided section, and the state is the same, these information provided sections are coupled (step 14).

The text message information producing portion 34 obtains the route, direction, and the name of the information provided section, and the names of the starting and terminal location points of the information provided section from the information provided section-map data link number association table 35 (step 15), and produces a text message made of the route/direction/start and terminal names, and the state. The text message information transmitting portion 36 transmits the text message information (step 16).

In this way, the text message information producing/transmitting apparatus 30 can produce level 1 traffic information from "road geometry data" and "event location data," and provide the on-vehicle apparatus with text message information such as "3.0km jam: *Kanshichi-Dori,* Inner Loop, *Koenji* Overpass → *Ohara-Ni* ," "about 40 min: *Kanshichi-Dori,* Inner Loop, *Ohara → Omori-Higashi,"* and "Accident/Lane Restricted: *Daisan Keihin* downline, *Kohoku → Hodogaya*."

### (Fourth Embodiment)

According to a fourth embodiment, a on-vehicle apparatus that produces audio traffic information based on "road geometry data" and "event location data" and outputs the information by audio will be described.

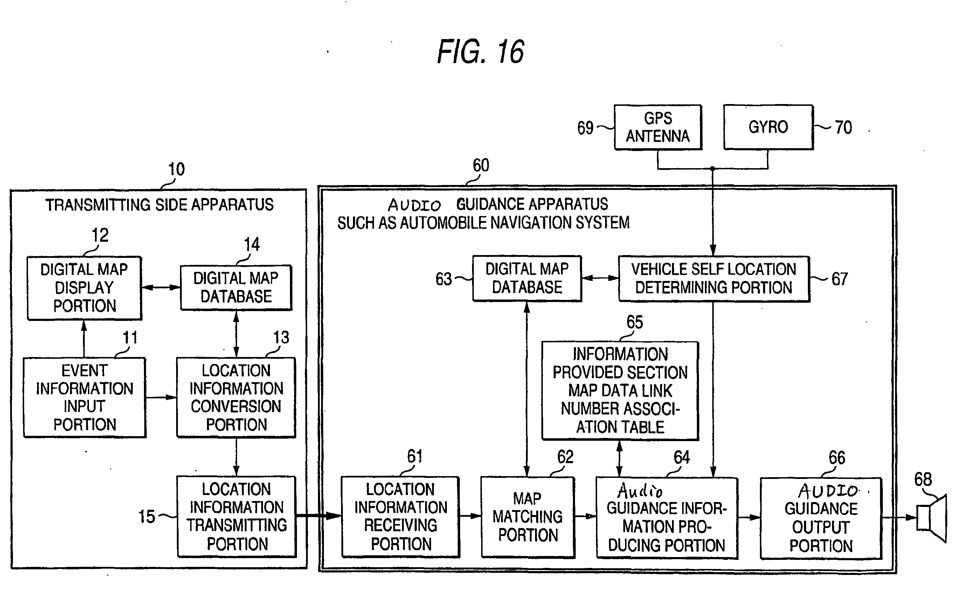

Fig. 16 shows the configuration of an audio guidance apparatus 60 corresponding to the on-vehicle apparatus, and a transmitting side apparatus 10 that transmits "road geometry data" and "event location data" to the audio guidance apparatus 60. The transmitting side apparatus 10 corresponds to a service provider that provides the "road geometry data" and "event location data" as level 3 traffic information to the on-vehicle apparatus. The configuration of the transmitting side apparatus 10 is not different from the first embodiment (Fig. 1).

The audio guidance apparatus 60 includes a location information receiving portion 61 that receives the "road geometry data" and "event location data" from the transmitting apparatus 10, a database 63 for a digital map, a map matching portion 62 that carries out map matching, specifies a road section represented by the "road geometry data" on a digital map of its own and specifies the event location in the road section based on the "event location data," an information provided section-map data link number association table 65, an audio guidance information producing portion 64 that produces audio guidance information, an audio guidance output portion 66 that outputs the produced audio guidance at a speaker 68, and a vehicle self location determining portion 67 that determines the location of the vehicle using data received by a GPS antenna 69 or data from a gyro 70.

The map matching portion 62, the audio guidance information producing portion 64 and the vehicle self location determining portion 67 in the audio guidance apparatus 60 are implemented when a computer stored in the audio guidance apparatus 60 carries out operations defined by a program.

The digital map database 63 in the apparatus stores geometry data for each link with a map data link number as shown in Fig. 14(a), and there is an association table as shown in Fig. 14(b) as the information provided section-map data link number association table 65.

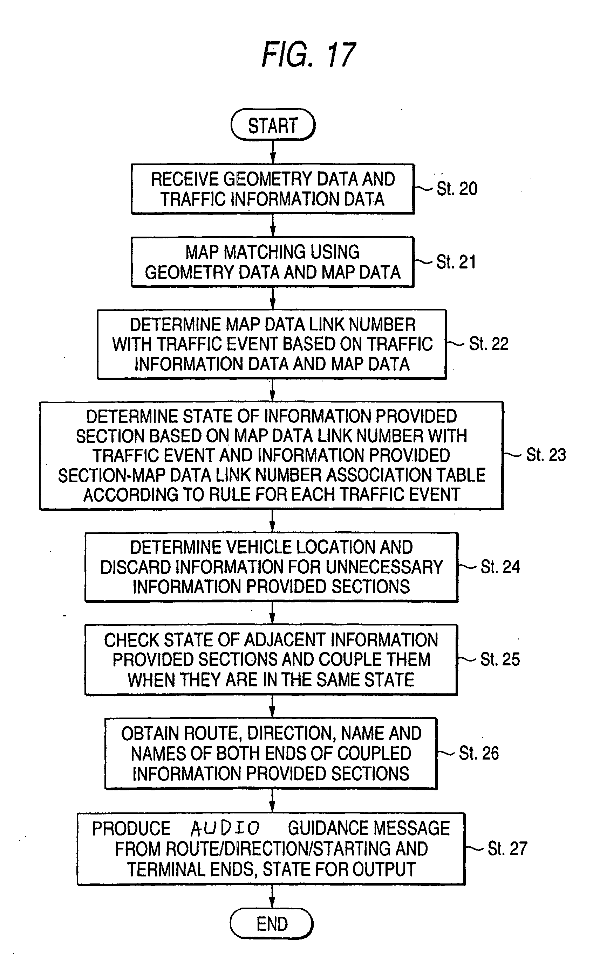

The flowchart in Fig. 17 shows an operation procedure for the audio guidance apparatus 60.

The transmitting side apparatus 10 transmits "geometry data (road geometry data) and traffic information data (event information data) shown in Fig. 20 by way of illustration as level 3 traffic information. The location information receiving portion 61 in the audio guidance apparatus 60 receives the geometry data and the traffic information data (step 20).

The map matching portion 62 carries out map matching using the received geometry data and the digital map data of the digital map database 63 and specifies a road section represented by the geometry data on the digital map (step 21).

The map matching portion 62 then compares the traffic information data and the digital map data for the specified road section, and determines the map data link number of a link with a traffic event (step 22).

Using the information provided section-map data link number association table 65 (Fig. 14(b)), the audio sound guidance information producing portion 64 determines the state of the information provided section from the map data link number with a traffic event according to rules for each traffic event (step 23). The processing is the same as the processing in step 13 according to the third embodiment.

The vehicle self location determining portion 67 determines the location of the vehicle and transmits the location to the audio sound guidance information producing portion 64. The audio sound guidance information producing portion 64 discards information on unnecessary information sections in consideration of the location of the vehicle (step 24).

The audio sound guidance information producing portion 64 checks the state of an adjacent information provided section and if the state is the same, these adjacent information provided sections are coupled (step 25).

The audio sound guidance information producing portion 64 obtains the route, direction, and the name of the information provided section, names, and the starting and terminal location points of the connected information provided sections from the information provided section-map data link number association table 65 (step 26), and produces an audio sound guidance message indicating the route/direction/start and terminal end names, and the state. The audio guidance output portion 66 outputs the audio sound guidance message from the speaker 68 (step 27).

In this way, the audio sound guidance apparatus 60 can produce audio sound guidance information on its own from the "road geometry data" and "event location data" received as level 3 traffic information and output by audio traffic information such as "3.0km jam: *Kanshichi-Dori,* Inner Loop, *Koenji* Overpass → *Ohara-Ni* ," "about 40 min: *Kanshichi-Dori*, Inner *Loop, Ohara → Omori-Higashi,"* and "Accident/Lane Restricted: *Daisan-Keihin* downline, *Kohoku* → *Hodogaya."*

Although the present invention has been described in detail by referring to the particular embodiments, it is clearly understood by those skilled in the art that various changes and modifications can be made without departing from the spirit and scope of the invention.

This application is based on Japanese Patent Application No. 2001-278369 filed on September 13, 2001, the teachings of which are incorporated herein by reference.

### < INDUSTRIAL APPLICABILITY >

As can be clearly understood from the foregoing description, by the method of producing traffic information according to the invention and an apparatus therefor, based on the traffic information that conveys the location of an event on a digital map made of a combination of a "road geometry data" and a "event location data," traffic information made of a deformed map, a text message, and an audio sound guidance can efficiently be produced.

The link number provided to each link according to the method of producing traffic information according to the present invention can arbitrarily be set by the side that produces traffic information, and does not take much trouble to maintain as compared to VICS link numbers.

## Claims

1. A method of producing traffic information, said information being simplified geometry traffic information having event information displayed on a deformed map based on road geometry data representing a road section on a digital map by data row information, and event information data representing the location of an event based on a relative location in said road section, said method comprising the steps of:
setting in advance the association between each link or each node on said digital map and an element forming an event presenting unit on said deformed map;
carrying out map matching between said road geometry data and digital map data, thereby specifying said road section on said digital map;
specifying a link or a node on said digital map corresponding to the location of the event based on said event information data and the digital map data for said road section; and
determining said element that displays event information based on said event information data on said deformed map according to said association set in advance for the link or node.

2. The method of producing traffic information according to claim 1, further comprising the steps of:
providing each link or each node on said digital map with an identification number that uniquely identifies the link or node, and
setting the association between said identification number and said element using an association table.

3. The method of producing traffic information according to claim 1, further comprising the steps of:
providing each link or node on said digital map with an identification number to uniquely identify said element; and
allowing said identification number to be included and held in digital map data for said link or node.

4. A method of producing traffic information having event information presented by a text message or an audio message based on road geometry data representing a road section on a digital map by data row information, and event information data representing the location of an event based on a relative location in said road section, said method comprising the steps of:
setting in advance the association between each link or each node on said digital map and an information provided section forming an event presenting unit by said text message or audio message;
carrying out map matching between said road geometry data and the digital map data, thereby specifying said road section on said digital map;
specifying a link or node on said digital map corresponding to the location of the event based on said event information data and said digital map data for said road section; and
determining said information provided section that presents event information based on said event information data by said text message or audio message according to said association set in advance for the link or node.

5. An apparatus for producing simplified geometry traffic information having event information displayed on a deformed map based on road geometry data representing a road section on a digital map by data row information, and event information data representing the location of an event based on a relative location in said road section, said apparatus comprising:
a database for a digital map;
a deformed map data portion holding geometry data for a deformed map, geometry data for an element forming a event presenting unit in the deformed map, and an association table having the description of the association between an identification number attached to each link on said digital map and said element;
receiving means for receiving said road geometry data and event information data;
map matching means for carrying out map matching between said road geometry data and the digital map data, thereby specifying said road section on the digital map and a link on the digital map corresponding to the location of an event from said event information data and the digital map data for said road section;
deformed map superposition information display determining means for determining said element to represent the event information based on said event information data from the link specified by said map matching means using said association table; and
deformed map superposition processing means for superposing a figure in a location on said deformed map corresponding to said element determined by said deformed map superposition information display determining means.

6. The apparatus for producing simplified geometry traffic information according to claim 5,
wherein said deformed map superposition processing means fills in said element determined by said deformed map superposition information display determining means for superposition on the geometry data for said deformed map.

7. The apparatus for producing simplified geometry traffic information according to claim 5,
wherein said deformed map superposition processing means superposes a particular mark in a location on said deformed map corresponding to said element determined by said deformed map superposition information display determining means.

8. The apparatus for producing simplified geometry traffic information according to any one of claims 5 to 7, further comprising:
deformed map transmitting means for transmitting deformed map data after the superposition processing by said deformed map superposition processing means in order to provide information.

9. The apparatus for producing simplified geometry traffic information according to claim 5, further comprising:
deformed map display means for displaying deformed map data after the superposition processing by said deformed map superposition processing means.

10. An apparatus for producing text message traffic information, said traffic information presenting event information by a text message based on road geometry data representing a road section on a digital map by data row information, and event information data representing the location of an event based on a relative location in said road section, said apparatus comprising:
a database for the digital map;
an association table having the description of the association between an identification number attached to each link on said digital map and an information provided section forming an event presenting unit by said text message;
receiving means for receiving said road geometry data and event information data;
map matching means for carrying out map matching between said road geometry data and the digital map data, thereby specifying said road section on said digital map, and specifying a link on said digital map corresponding to the location of the event based on said event information data and said digital map data for said road section;
text massage information producing means for determining said information provided section for which event information based on said event information data from the link specified by said map matching means is displayed using said association table, and producing text message information based on the information on said information provided section and said event information; and
text message information transmitting means for transmitting said text message information produced by said text message information producing means for providing information.

11. An apparatus for producing audio sound message traffic information having event information presented by an audio message based on road geometry data representing a road section on a digital map by data row information, and event information data representing the location of an event based on a relative location in said road section, said apparatus comprising:
a database for the digital map;
an association table having the description of the association between an identification number attached to each link or node on said digital map and an information provided section forming an event presenting unit by said audio message;
receiving means for receiving said road geometry data and event information data;
map matching means for carrying out map matching between said road geometry data and digital map data, thereby specifying said road section on said digital map and specifying a link or node on said digital map corresponding to the location of an event based on said event information data and said digital map data for said road section;
audio message information producing means for determining said information provided section for which event information based on said event information data from the link or node specified by said map matching means is displayed using said association table, and producing audio message information based on information for said information provided section and said event information; and
audio guidance output means for outputting said audio message information produced by said audio message information producing means by audio.

12. The apparatus for producing audio message traffic information according to claim 11, further comprising:
vehicle self location determining means for determining the vehicle's self location,
wherein said audio message information producing means identifies said information provided section for which information presentation is not necessary based on the vehicle's self location determined by said vehicle self location determining means, and excluding the information provided section from the object of the audio message.
